# EUROPEAN PATENT APPLICATION

(11) **EP 2 578 424 A1**
(43) Date of publication of application: **10.04.2013**
(21) Application number: 12186950.7
(22) Date of filing: 02.10.2012
(51) Int. Cl.: B60H 1/34

(54) **Air distribution system for a vehicle interior**

(30) Priority: 03.10.2011 IT CS20110028
(71) Applicant: Di Renzo, Alberto, 89012 Pizzo (IT)
(72) Inventor: Di Renzo, Alberto, 89012 Pizzo (IT)
(74) Representative: Perrotta, Aldo

(57) **Abstract**

Air distribution system for vehicle interior, comprising a dashboard (1) and at least one air outlet vent (2) for allowing an airflow into the vehicle interior, wherein the air outlet vent (2) is adapted to be movable between a stored position, in which the air outlet vent (2) is positioned on a seat (3) provided on the dashboard (1), and a detached position, in which the air outlet vent (2) is positioned at a distance from the seat (3) and in that the air outlet vent (2) is provided with means (5) for adjusting autonomously the airflow direction and the air flow-rate in the stored and in the detached position.

## Description

The present invention relates to the technical field of air distribution systems for vehicle interior.

Vehicles, such as automotive vehicles, typically include an air distribution system that blows air in the passenger compartment through air outlet vents arranged on the vehicle dashboard. Conventional design of the air distribution systems allows for manual adjustment of the direction of the air flowing from the outlet vents, typically by orienting autonomously vertical and horizontal directional slats arranged at the air outlet vents.

It would be desirable, however, to enhance the dirigibility of the airstream of hot or cold air in order to easily reach a desired area of the vehicle interior, so that the airstream can be used to heat or refresh the area rapidly or, for example, to dry the passenger's hair or other objects such as clothes. Document US2004/0112468 A discloses a flexible air conduit that can be connected to an air conditioning vent through a vent connector and, at its opposite end, includes a discharge nozzle by means of which the airflow can be directed from the air vent to a desired location of the automobile. While this solution permits the air conditioning or heating to reach remote locations of the passenger compartment, it suffers of the drawbacks of a rather unconfortable and time-consuming mounting operation. Furthermore, when not in use, the air conduit must be stored somewhere in the passenger compartment in order to be readily accessible in case of need. This inevitably reduces the storage space available in the passenger compartment.

It is therefore an object of the present invention to provide an air distribution system for vehicles enhancing the dirigibility of the airflow towards desired locations of the passenger compartment, and that can be easily and rapidly utilized and does not reduce the storage space in the vehicle.

The above-mentioned object is achieved by means of an air distribution system according to claim 1. Further advantageous features of the air distribution system are defined in the dependent claims.

Other characteristics and advantages of the present invention will become more apparent from the following description of embodiments given as non-restrictive examples of an air distribution system as illustrated in the attached figures, in which:
Fig. 1 shows an air distribution system according to the present invention with the air outlet vents in the stored position.
Fig. 2 shows the air distribution system with one air outlet vent in the detached position.
Fig. 3 shows a perspective view of the air distribution system according to the present invention with one air outlet vent in the detached position.
Fig. 4 is a schematic representation of a partly disassembled movable air outlet vent according to the invention.
Fig. 5 shows a movable air outlet vent provided with magnetic-type locking means.
Fig. 6 shows a movable air outlet vent provided with bajonet-type locking means.
Fig. 7 shows a movable air outlet vent provided with illumination means.
Fig. 8 shows another example of an air distribution system according to the present invention.

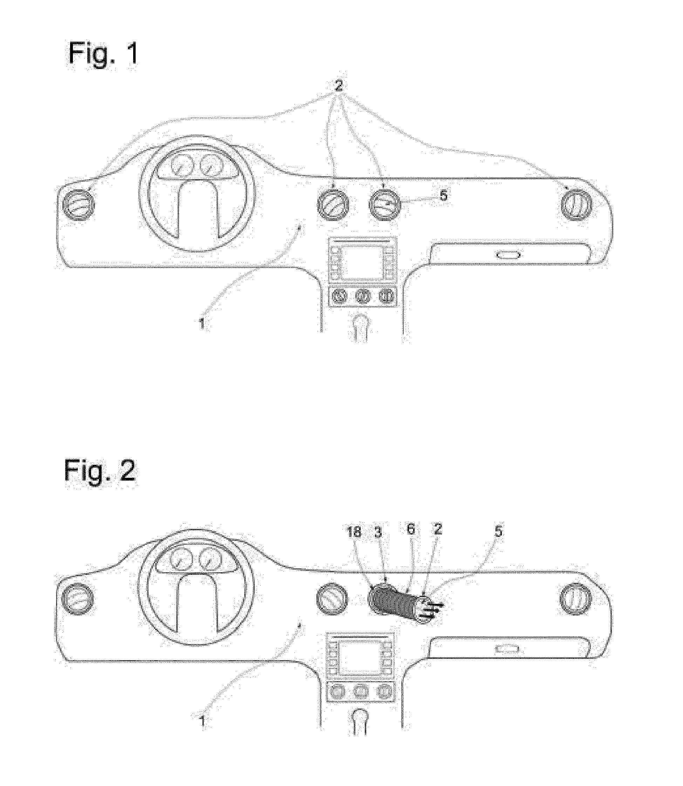

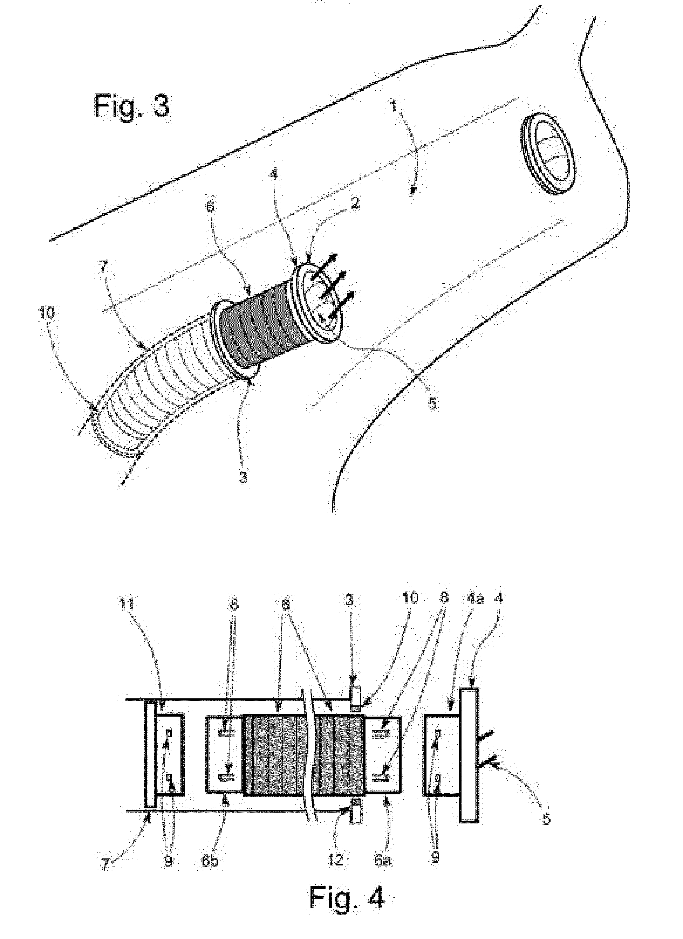

With reference to the figures above, the air distribution system according to the present invention comprises a vehicle dashboard 1 and at least one air outlet vent 2 for allowing an airflow into the vehicle interior, the airflow is schematically represented in Fig. 2 and 3 by the arrows pointing outwards from the air outlet vent 2. The number and the dimensions of the air outlet vents can vary according to the needs, as well as their positions on the dashboard 1. The air outlet vents 2 shown in Fig. 1 and 2 have a substantially circular shape, however, air outlet vents having other shapes, such as rectangular, can also be envisaged. Furthermore the air outlet vents can be arranged to protrude from the dashboard or to lie flush with respect to the dashboard. A combination of air outlet vents having different shapes and/or dimensions can also be envisaged and should be intended as covered by the present invention.

According to the present invention, at least one of the air outlet vents 2 is movable between a stored position, in which the air outlet vent 2 is positioned on a seat 3 arranged on the dashboard 1, as shown in Fig. 1, and a detached position, in which the air outlet vent 2 is positioned at a distance from the seat 3 and is adapted to direct the airflow towards a desired location of the vehicle interior, as shown in Fig. 2.

As illustrated also in Fig. 3 and 4, the air outlet vent 2 comprises a frame 4 and one or more orientable slats 5, which allow the user to adjust autonomously the air direction and the air flow-rate passing through the air outlet vent 2 both in the stored and in the detached position. As shown in detail in Fig. 4, the frame 4 comprises a back portion 4a, which is detachably connected to a first end 6a of a movable air conduit 6, e.g. by means of one or more flexible tabs 8 engaging in corresponding grooves 9. The movable air conduit 6 is inserted in a fixed conduit 7 of the air distribution system and is telescopically slidable with respect to the fixed conduit 7.

Preferably, the movable air conduit 6 is formed as a corrugated flexible hose made of plastic or an elastomeric material and can be designed to be slightly compressible and/or extensible, i.e. its length can be elastically increased by stretching it out or reduced by compressing it. Alternatively, the movable air conduit 6 can be adapted to be manually deformable and, when released, be able to hold the deformed position. For achieving this, the movable air conduit 6 may comprise a deformable metallic core coated with a layer of elastomeric material. Furthermore, the movable air conduit 6 may be internally insulated to maintain the internal air temperature.

The seat 3 is arranged on the dashboard 1 and is provided with a central passage permitting the extraction of the movable air conduit 6. Advantageously, the passage is shaped as a through hole having a diameter slightly larger than the diameter of the movable air conduit 6. The passage is provided with an internal annular gasket 10 for avoiding air leakages between the movable air conduit 6 and the seat 3 when the air outlet vent 2 is in an extracted position.

When the air outlet vent 2 is in the stored position, the movable air conduit 6 is completely inserted in the fixed conduit 7 and is therefore substantially concealed behind the air outlet vent 2. By detaching the air outlet vent 2 from the seat 3 and moving it to the desired position, the movable air conduit 6 slides out of the fixed conduit 7 telescopically and flexes to follow the movement of the air outlet vent 2. The air outlet vent 2, along with the movable air conduit 6, is movable up to a fully extracted position, in which the air outlet vent 2 is able to reach a maximum distance from the seat 3. By moving the air outlet vent 2 back towards its seat 3, the movable air conduit 6 is also progressively re-inserted back into the fixed conduit 7. It should be noted that also in the stored position, the air outlet vent 2 is able to allow the airflow directly into the vehicle interior and to adjust autonomously the air direction and the air flow-rate by means of the orientable slats 5, so that, in the stored position, the movable air outlet vent 2 is functionally equivalent to a conventional, fixed air outlet vent, as known in the art. In the present example only one air outlet vent is movable, however, in general, other air outlet vents can also be movable or they can be fixedly attached to the dashboard 1.

By orienting the air outlet vent 2 conveniently, a flow of fresh or hot air can be easily directed towards a desired area of the vehicle's passenger compartment, for example an object needing to be dried or refreshed.

In order to limit the telescopic movement of the movable air conduit 6 with respect to the fixed conduit 7, the movable air conduit 6 is provided with a flange 11 arranged at a second end 6b, opposite to the first end 6a. Preferably the flange 11 is detachably connected to the second end 6b of the movable air conduit 6 by means of one or more flexible tabs 8 engaging into grooves 9, as shown in Fig. 4. When the air outlet vent 2 is in the fully extracted position, the flange 11 comes into abutment with an appropriate surface 12 provided in the fixed part of the air distribution system and fixed with respect to the movable air outlet vent 2, for example a surface provided in the fixed conduit 7 or the surface 12 of the seat 3, as shown in **Fig. 4****.** The abutment surface 12 acts as a limit stop and prevents the movable air conduit 6 from further sliding out of the fixed conduit 7.

As shown in Fig. 3 and 4, the flange 11 presents a perimeter substantially corresponding to the cross-section profile of the fixed conduit 7, and is dimensioned such that the edge of the flange 11 constantly remains in contact with the internal surface of the fixed conduit 7 during the telescopical movement of the movable air conduit 6. Advantageously, the flange 11 is at least in part made of an elastomeric material. This arrangement helps to minimize the air leakages between the fixed conduit 7 and the movable air conduit 6 and to reduce the rattling noise due to vibrations when the vehicle is in movement.

The air outlet vent 2 and the seat 3 may be provided with locking means 18 for holding the air outlet vent 2 firmly in the stored position and avoiding an unintentional detachment of the air outlet vent 2 from the seat 3.

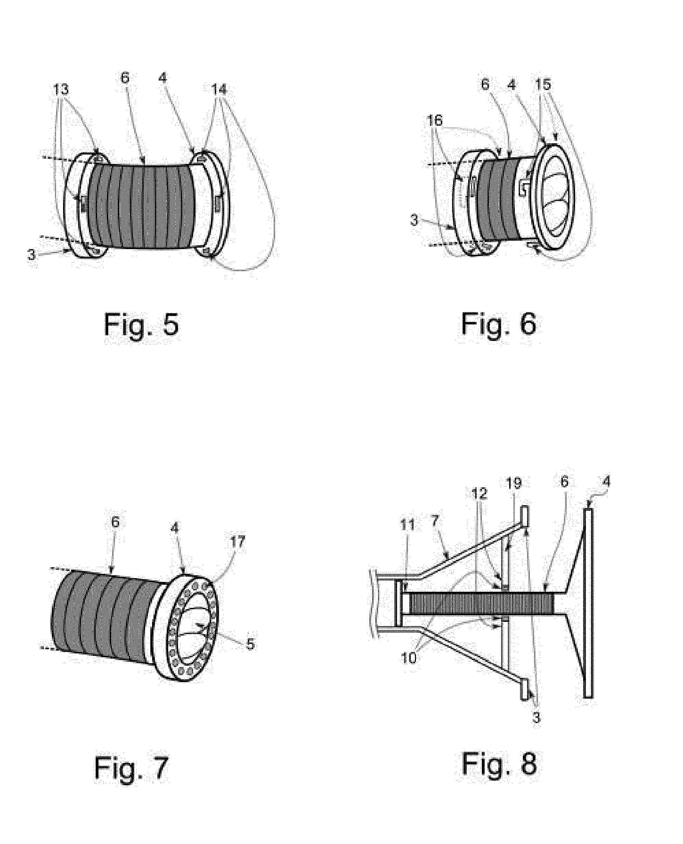

In a preferred embodiment, as shown in Fig 5, the frame 4 is provided with one or more magnetic elements 13 each presenting a magnetic surface adapted to cooperate with one or more surfaces of corresponding ferromagnetic elements 14 arranged on the seat 3. The interaction between the magnetic and ferromagnetic surfaces holds the frame 4 of the air outlet vent 2 firmly in contact with the seat 3 when the air outlet vent 2 is in the stored position.

Similarly, the flange 8 may also be provided with one or more magnetic surfaces adapted to cooperate with one or more corresponding ferromagnetic surfaces arranged on a back surface of the seat 3. The interaction between the magnetic and ferromagnetic surfaces holds the flange 8 in contact with the seat 3 when the air outlet vent is in the fully extracted position.

Clearly, the positions of the magnetic and ferromagnetic elements described above can be exchanged.

Fig. 6 illustrates an alternative solution to the magnetic type locking means described above. According to this embodiment, one or more protrusions 15 are provided on the frame 4 and they are adapted to engage one or more corresponding recesses 16 provided on the seat 3 when the air outlet vent 2 is in the stored position. Preferably, the protrusions 15 and the recesses 16 are adapted to engage with each other in a bajonet-type locking configuration. For locking the air outlet vent 2 in the stored position, the frame 4 may be positioned on the seat 3 in such manner that the protrusions 15 coincide with the corresponding recesses 16, then the frame 4 can be slightly rotated so that the protrusions 15 engage into the recesses 16 thereby firmly locking the air outlet vent 2 in the stored position.

The protrusions and/or the recesses can also have a different shape from that shown in Fig. 6 or they can be positioned differently, for instance on the lateral surface of the frame 4 and correspondingly on the seat 3. In this latter case, it may be advantageous that the protrusions are elastically biased, e.g. through a spring, or be made themselves of an elastic material, so that upon positioning the air outlet vent 2 on the seat 3, the protrusions snap into the recesses and hold the frame 4 of the air outlet vent 2 on the seat 3.

Alternatively, the protrusions may be arranged on the seat 3 and the recesses on the frame 4.

For aesthetical reasons it would also be desirable that, in the stored position, the air outlet vent 2 does not stick out with respect to the dashboard 1. For achieving this, the seat 3 may be located in a recessed position in the dashboard 1, so that the air outlet vent 2, when positioned on the seat 3, lies substantially flush with respect to the dashboard's surface. In this case it may be advantageous to provide an indentation, e.g. for inserting a finger, in order to facilitate the detachment of the air outlet vent 2 from the seat 3. Additionally or alternatively, grasping means may be provided on the frame 4 for exerting a manual pulling action to disconnect the air outlet vent 2 from the seat 3.

Alternatively, a touch-latch connection between the air outlet vent 2 and the seat 3 may also be envisaged, such as commonly known e.g. in the technical field of furniture. In this case, the disconnection of the air outlet vent 2 from the seat 3 may be carried out by manually pushing on the vent 2 and then releasing, whereby the vent 2 pops out from the seat 3.

As a further advantageous feature, the frame 4 of the air outlet vent 2 may be provided with illumination means as shown in Fig. 7, preferably one or more LEDs 17, and it may also comprise a storage compartment for an electrical power source, such as one or more batteries. This solution permits the use of the movable air outlet vent 2 also as a movable torch. The LEDs 17 may be circumferentially arranged on the frame 4 and may be adapted to be automatically switched on when the air outlet vent 2 is in the detached position and off when the air outlet vent 2 is in the stored position. To this purpose, switch contacts can be appropriately arranged on the frame 4 or on the seat 3. Alternatively, the LEDs 17 can be manually turned on and off by means of a manual switch positioned on the air outlet vent 2.

As illustrated schematically in Fig. 8, the fixed conduit 7 can also have a variable section, for example it may present an increasing section in the airflow direction. In this case, it would be advantageous to provide a collar 19 on the internal surface of the fixed conduit 7, preferably in a position proximate to the seat 3. The collar 19 is provided with an abutment surface 12 acting as a limit stop, for limiting the telescopic movement of movable air conduit 6 when the air outlet vent 2 is detached from the seat 3.

It can be also advantageous that, upon disconnecting the air outlet vent 2 from its seat 3, the air fan of the air distribution system is automatically activated at high speed and that the airflow is directed preferentially to the detached air outlet vent 2 so that the air is readily available for heating or refreshing rapidly at the desired location. By acting on the adjusting knobs of the vehicle's air conditioning system subsequently, this condition can be modified as desired.

The air distribution system of the present invention allows the use of the heated or cooled airflow to dry a passenger's hair or other objects, such as clothes, ski boots, etc. or to quickly refresh a remote area in the passenger compartment.

The possibility of detaching the air outlet vent from its seat on the dashboard improves the dirigibility of the airflow as well as the availability of fresh or hot air at remote locations of the vehicle's passenger compartment. By detaching the air outlet vent from the seat, the airflow can reach remote locations of the vehicle interior without however reducing the storage space of the vehicle, since the flexible air conduit remains substantially concealed behind the air outlet vent when the air outlet vent is in its stored position.

Also, the appearance of the dashboard does not result negatively affected.

Moreover, it will be noted that the present invention does not require complicated mounting operation before it can be used, as the movable air outlet vent is always ready to use and it can be detached from its seat by a simple manual action and thereby offers a considerable simplification. Although in the present example, the air distribution system has been shown in combination with an automobile passenger compartment, it may however also be used in different types of vehicles, such as maritime vehicles or airplanes, or for other applications.

While the invention has been described with respect to exemplary embodiments, those skilled in the art will appreciate that other embodiments may be devised, without departing from the scope of the present invention, as defined in the claims.

## Claims

1. Air distribution system for vehicle interior, comprising a dashboard (1) and at least one air outlet vent (2) for allowing an airflow into the vehicle interior, **characterized in that** the air outlet vent (2) is adapted to be movable between a stored position, in which the air outlet vent (2) is positioned on a seat (3) provided on the dashboard (1), and a detached position, in which the air outlet vent (2) is positioned at a distance from the seat (3) and **in that** the air outlet vent (2) is provided with means (5) for adjusting autonomously the airflow direction and the air flow-rate in the stored and in the detached position.

2. Air distribution system according to claim 1 **characterized in that** the air outlet vent (2) comprises a frame (4) and at least one orientable slat (5) for adjusting autonomously the airflow direction and the air flow-rate and **in that** a movable air conduit (6) is provided, having a first end (6a) connected to the frame (4).

3. Air distribution system according to claim 2 **characterized in that** the movable air conduit (6) is flexible and is telescopically slidable with respect to a fixed conduit (7).

4. Air distribution system according to claim 3 **characterized in that** the movable air conduit (6) is provided at its second end (6b), opposite to the first end (6a), with a flange (11) adapted to cooperate, in a fully extracted position of the air outlet vent (2), with an abutment surface (12) in order to limit the sliding movement of the movable air conduit (6).

5. Air distribution system according to claim 1 **characterized in that** the air outlet vent (2) and the seat (3) are provided with locking means (18) for locking the air outlet vent (2) with respect to the seat (3) in the stored position.

6. Air distribution system according to claim 5 **characterized in that** the locking means (18) are of magnetic type, wherein the frame (4) of the air outlet vent (2) is provided with at least one magnetic element (13) adapted to cooperate with at least one corresponding ferromagnetic element (14) arranged on the seat (3), or vice-versa.

7. Air distribution system according to claim 5 **characterized in that** the locking means (18) comprises at least one protrusion (15) adapted to cooperate with at least one corresponding recess (16) in order to lock the air outlet vent (2) with respect to the seat (3).

8. Air distribution system according to claim 7 **characterized in that** the protrusion (15) and the recess (16) are adapted to engage with each other in a bajonet-type lock.

9. Air distribution system according to claim 2 **characterized in that** the air outlet vent (2) is provided with illumination means, preferably LEDs (17) arranged on the frame (4).

10. Air distribution system according to claim 4 **characterized in that** the fixed conduit (7) has a variable section and is provided with a collar (19) arranged on the internal surface of the fixed conduit (7) and provided with the abutment surface (12) for limiting the sliding movement of movable air conduit (6).
